# EUROPEAN PATENT APPLICATION

(11) **EP 3 035 183 A1**
(43) Date of publication of application: **22.06.2016**
(21) Application number: 15196514.2
(22) Date of filing: 26.11.2015
(51) Int. Cl.: G06F 3/0488

(54) **TOUCH-SENSITIVE DISPLAY WITH HOVER LOCATION MAGNIFICATION**

(30) Priority: 19.12.2014 US 201414576897
(71) Applicant: Delphi Technologies, Inc., Troy, MI 48007 (US)
(72) Inventor: PUDIYATHANDA, Devaiah A., 560076 JP Nagar 8th phase (IN)
(74) Representative: Delphi France SAS

(57) **Abstract**

A touch-sensitive display (12) system (10) includes a display (12), a contact detection means (20), and a hover detection means (26). The display (12) is configured to display (12) an image (16, 116, 216) toward a surface (14) of the display (12). The contact detection means (20) is configured to determine a contact location (22) on the surface (14) indicative of where a finger (18) contacts the surface (14). The user input is determined based on content of the image (116) at the contact location (22). The hover detection means (26) is configured to determine a hover location (28) of the finger (18) relative to the surface (14) when the finger (18) is within a hover distance (30) of the surface (14). The system (10) is further configured to magnify a selected portion (32, 132, 232) of the image (16, 116, 216) that corresponds to the hover location (28).

## Description

### TECHNICAL FIELD OF INVENTION

This disclosure generally relates to touch-sensitive display system, and more particularly relates to magnification or enlargement of a selected portion of the image that corresponds to a hover location of a finger hovering over the display.

### BACKGROUND OF INVENTION

It is known to equip vehicles with touch-sensitive displays for controlling vehicle systems such as, for example, a navigation system, an entertainment system, and/or a heating/ventilation/air-conditioning (HVAC) system. With the emergence of connectivity and transfer of vehicle data, the content of the display may become too crowded with control options to be easily operated by an operator of the vehicle while the vehicle is in motion. That is, as graphical symbols displayed on touch-sensitive displays decrease in size so more symbols can be displayed, the smaller size of each symbol makes it more difficult to accurately touch the desired symbol while driving.

### SUMMARY OF THE INVENTION

Described herein is a touch-sensitive display system configured to detect a finger hovering over the display, and magnify a portion of the display that is proximate to (i.e. underneath) the location where the finger is hovering. This effect may appear similar to a magnification or bubble lens moving about the display in accordance with the location of the finger hovering over the display, or may have the effect of enlarging the graphical symbol that is closest to the location of the finger hovering over the display.

In accordance with one embodiment, a touch-sensitive display system is provided. The system is configured to determine a user input. The system includes a display, a contact detection means, and a hover detection means. The display is configured to display an image toward a surface of the display. The contact detection means is configured to determine a contact location on the surface indicative of where a finger contacts the surface. The user input is determined based on content of the image at the contact location. The hover detection means is configured to determine a hover location of the finger relative to the surface when the finger is within a hover distance of the surface. The system is further configured to magnify a selected portion of the image that corresponds to the hover location.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a front view of a display of a touch-sensitive display system showing an image with a finger hovering over the display in accordance with one embodiment;
Fig. 2 is a side view of the display of the system of Fig. 1 with the finger hovering over the display in accordance with one embodiment;
Fig. 3 is of front view of the display of Fig. 1 with another exemplary image in accordance with one embodiment;
Fig. 4 is the image of Fig. 3 with the finger hovering over the display in accordance with one embodiment; and
Fig. 5 is of front view of the display of Fig. 1 with another exemplary image and the finger hovering over the display in accordance with one embodiment.

### DETAILED DESCRIPTION

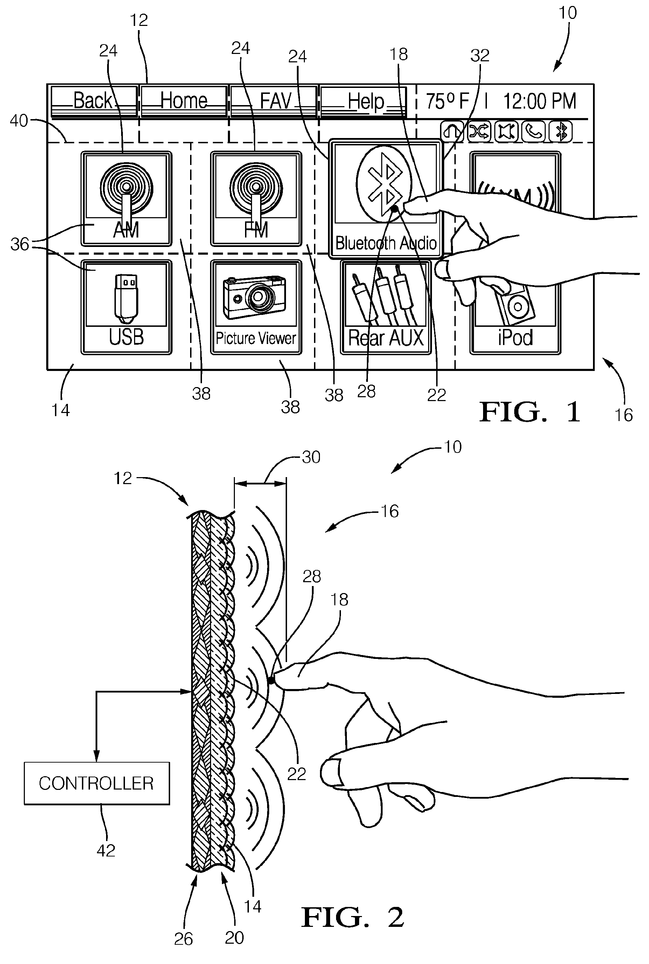

Fig. 1 illustrates a non-limiting example of a touch-sensitive display system, hereafter the system 10, which includes a display 12, and is particularly well suited for use in a vehicle (not shown). While the teachings presented herein may be used for comparable systems that are not installed in a vehicle, the advantages provided by the configuration of the system 10 are best appreciated when used in a vehicle while the vehicle is moving. The advantages will be especially appreciated by an operator of the vehicle who is attempting to touch a specific location on the display 12 to operate various vehicle systems within the vehicle (e.g. a navigation system, an entertainment system, a HVAC system, etc.) while still safely controlling the direction and speed of the vehicle.

In general, the system 10 is configured to determine a user input. As used herein, the term 'user input' is used to describe or designate the adjustment to a vehicle system and/or the activation a vehicle system of desired by the operator. For example, a user input determined by the system 10 in response to the operator touching the display 12 may indicate a desire by the operator to change the input source for the entertainment system, or change the destination of the navigation system.

In general, the display 12 is configured to display an image 16 toward a surface 14 of the display 12. The display 12 may be a light-emitting-diode (LED) array type, a liquid-crystal-device (LCD) array type, a rear-projection type, or any other type of display technology that will cooperate with other features described herein that are provided to determine the location of a finger 18 relative to the display 12. These other features will be described in more detail below.

Fig. 2 further illustrates non-limiting features of the system 10. The system 10 includes a contact detection means 20 configured to determine a contact location 22 on the surface 14 indicative of where the finger 18 contacts the surface 14. Figs. 1 and 2 illustrate the finger 18 spaced apart from the surface 14 for the purpose of explanation, and the contact location 22 is an example of where the finger 18 might make contact with the surface 14. In general, the user input is determined based on content of the image 16 at the contact location 22. For example, if the finger 18 makes contact with the portion of the image 16 in Fig. 1 that is within the graphic symbol 24 labeled 'Bluetooth Audio', then the entertainment system of the vehicle may operate to receive data via a BLUETOOTH® transceiver, as will be recognized by those in the art. A variety of technologies are commercially available to detect when and where contact is being made on a surface of a display by, for example, a finger, or suitable stylus. Some of the technologies that are able to determine the contact location 22 on the surface 14 of the display 12 are discussed in more detail below.

The system 10 also includes a hover detection means 26 configured to determine a hover location 28 of the finger 18 relative to the surface 14 when the finger 18 is within a hover distance 30 of the surface 14. The hover location 28 may be characterized by X, Y, and Z coordinates relative to the surface 14, where the axis for the X and Y coordinates would be co-planar with the surface 14, and the Z coordinate would be an indication of the distance between the finger 18 and the surface 14 along an axis normal to the plane of the surface 14. Alternatively, the X and Y coordinates of the hover location 28 may be offset from the contact location 22 by an amount that allows the operator to see the contact location 22 while the finger 18 of the operator approaches the surface 14. It is also contemplated that such an offset may be variable depending on the Z coordinate of the hover location 28. For example, the offset may be reduced as the finger 18 gets closer to the surface 14, and the offset may be set to zero when the finger 18 makes, or is about to make, contact with the surface 14. The hover location 28 may be determined by a variety of known technologies such as, but not limited to, an optical system with two or more cameras directed to the area proximate to the display, a matrix of light beams, ultrasonic transducers, radar transducers, and capacitance type proximity sensors.

Display systems with the ability to determine the contact location 22 and/or the hover location 28 are described in United States Patent Application Publication 2011/0187675 by Nakia et al. published August 4, 2011; United States Patent Application Publication 2013/0009906 by Posamentier published January 10, 2013; and United States Patent Application Publication 2014/0267130 by Hwang et al. published September 18, 2014. As such, while the contact detection means 20 and the hover detection means 26 are illustrated herein as two distinct parts, it is recognized that a single technology could be used to determine both the contact location 22 and the hover location 28. The contact detection means 20 and the hover detection means 26 are illustrated herein as two distinct parts only simplify the explanation of the system 10.

An advantage of the system 10 described herein over the systems shown in the published applications noted above is that the system 10 is configured to magnify a selected portion 32 of the image 16 that corresponds to the hover location 28. Referring to Fig. 1, the content of the image 16 includes a graphic symbol characterized by a symbol size 36 and a contact area 38 associated with each of the graphic symbols 24. It should be understood that the graphic symbol 24 labeled 'Bluetooth Audio' would be displayed the same size as the other graphic symbols if the finger 18 was not proximate to the display 12, i.e. not within the hover distance 30 of the display 12. When the finger 18 approaches the display 12 and is within the hover distance 30, then the graphic symbol 24 that underlies or is closest to the X and Y coordinates of the hover location 28 will be magnified, i.e. the symbol size 36 of the graphic symbol 24 that corresponds to the hover location 28 will be increased. By increasing the symbol size 36 the operator can quickly determine that the finger 18 is hovering over the desired graphic symbol 24, and the larger target is more easily selected.

The surface 14 may be partitioned into a plurality of contact areas 38 as indicated by the dashed lines 40 which determine the boundaries of the contact areas 38. Typically the dashed lines 40 would not be shown on the display 12 as part of the image 16. That is, the dashed lines 40 are shown in Fig. 1 only to facilitate the description of the system 10. If the X and Y coordinates of the hover location 28 are within one of the contact areas 38, then the symbol size 36 of the graphic symbol 24 within that contact area is increased. The increase in the symbol size 36 may cause the some of the edges of the graphic symbol 24 to coincide with the boundaries of the contact area (i.e. the dashed lines 40). Alternatively, the symbol size may be increase to the point that the graphic symbol 24 overlaps the dashed lines 40, and the contact area 38 may also be cooperatively increased. It follows that the user input corresponds to the graphic symbol 24 when the contact location 22 is within the contact area 38, and that the contact area 38 may increase in accordance with the increase in the symbol size 36.

By increasing the symbol size 36, i.e. by magnifying the selected portion 32 of the image 16 that corresponds to the hover location 28, the operator is able to more easily determine that the finger 18 is over the desired graphic symbol before actually touching the display 12. As such, even though the operator may experience random accelerations due the movement of the vehicle, the operator more likely to select the desired graphic symbol than would be the case if magnification was not provided.

The system 10 may also be configured so the symbol size 36 and the contact area 38 remain increased until the finger 18 does not have a hover location 28 within the increased contact area. The effect is that the finger 18 would need to either move well away from the display 12 to a distance greater than the hover distance 30 to have the symbol size 36 and the contact area 38 return to the normal or default values, OR the finger 18 would need to move sideways such that X and Y coordinates of the hover location 28 are well away from the boundaries of original (unmagnified) graphic symbol even though the finger 18 is still within the hover distance 30.

The system 10 may include a controller 42 configured to operate the display 12 to show the image, and operate or communicate with the contact detection means 20 and the hover detection means 26 to determine the location or proximity of the finger 18. The controller 42 may include a processor such as a microprocessor or other control circuitry such as analog and/or digital control circuitry including an application specific integrated circuit (ASIC) for processing data as should be evident to those in the art. The controller 42 may include memory, including non-volatile memory, such as electrically erasable programmable read-only memory (EEPROM) for storing one or more routines, thresholds and captured data. The one or more routines may be executed by the processor to perform steps for processing signals received by the controller 42 to determine the location or proximity of the finger 18 as described herein.

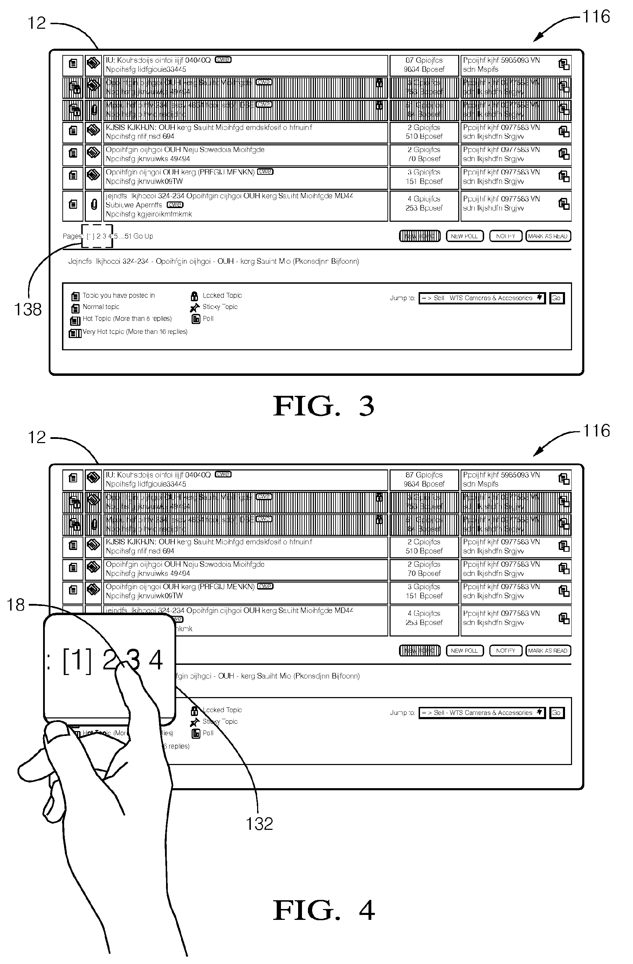

Figs. 3 and 4 illustrate another non-limiting example of an image 116 where a selected portion 132 of the image 116 is magnified as a result of the finger 18 being proximate to the contact area 138. In this example, the selected portion 132 may include or encompass multiple choices. In the prior example shown in Fig. 1, touching the area within the contact area 38 may result in the same action regardless of where contact is made within the contact area 38. By contrast, in this example, the selected portion 132 may have a plurality of subareas that can be selected. For example, the '1', '2', '3', or '4' may be selected by touching the proper area within the selected portion 132. It is noted that the effect of magnification in this instance provides for an effective contact area within the selected portion that is larger than the original or default size of the contact area 138 shown in Fig. 3.

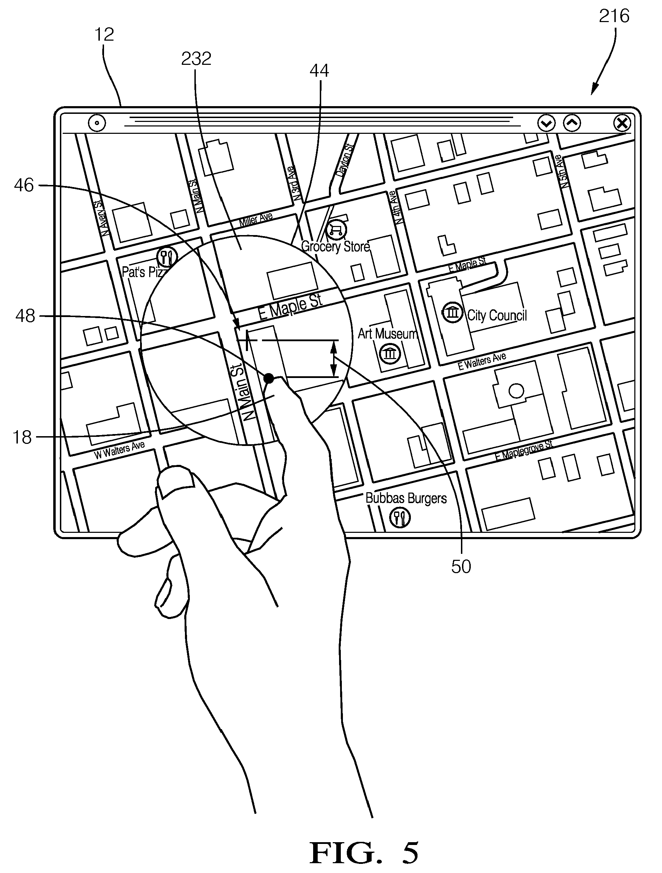

Fig. 5 illustrates another non-limiting example of an image 216 where a selected portion 232 of the image 216 is magnified as a result of the finger 18 being proximate to the selected portion 232. In this example, the selected portion 232 is characterized as (i.e. has an appearance similar to) a magnification lens 44 overlying the display 12. The magnification lens 44 may include an alignment mark 46 indicative of the contact location that will be assigned or determined by the system 10 if the finger 18 contacts the display from the current hover location 48. The system 10 may be further configured to provide an offset 50 relative to the current hover location 48 so the operator can more clearly see where the alignment mark 46 is positioned over the image 216. In this example, if the finger touches the display 12 while positioned as shown, the contact location determined by the system 10 will coincide with the alignment mark 46 as opposed to the point of actual contact made by the finger 18. The distance and direction of the offset 50 may be a preset value stored in the controller 42, or may be variable based on, for example, the orientation of the finger 18 which may be determined by the hover detection means 26. For example, if the finger 18 is oriented as shown in Fig. 1, then the offset 50 may be such that the alignment mark 46 is positioned to the left of the tip of the finger (i.e. the current hover location 48) instead of in the upward direction as shown in Fig. 5.

Accordingly, a touch-sensitive display system (the system 10) and a controller 42 for the system 10 are provided. The system 10 magnifies a selected portion (32, 132, 232) of an image (16, 116, 216) present on the display 12 so an operator attempting to touch a specific feature or aspect of the image can do so with greater reliability. That is, the operator is more likely to get the desired response or action because the point or target where the operator must touch the display 12 is enlarged, i.e. magnified. This magnification feature is particularly advantageous when the system 10 is being operated in a moving vehicle since irregularities in the roadway may jostle the operator such that the operator inadvertently touches the display 12 at other than a desired contact location. Furthermore, the appearance of a magnified image or enlarged graphic symbol helps the operator to more quickly visually verify that the finger is proximate to the desired contact location prior to making actual contact with the display 12.

While this invention has been described in terms of the preferred embodiments thereof, it is not intended to be so limited, but rather only to the extent set forth in the claims that follow.

## Claims

1. A touch-sensitive display (12) system (10) configured to determine a user input, said system (10) comprising:
a display (12) configured to display (12) an image (16, 116, 216) toward a surface (14) of the display (12);
a contact detection means (20) configured to determine a contact location (22) on the surface (14) indicative of where a finger (18) contacts the surface (14), wherein the user input is determined based on content of the image (16, 116, 216) at the contact location (22); and
a hover detection means (26) configured to determine a hover location (28) of the finger (18) relative to the surface (14) when the finger (18) is within a hover distance (30) of the surface (14), wherein the system (10) is configured to magnify a selected portion (32, 132, 232) of the image (16, 116, 216) that corresponds to the hover location (28).

2. The system (10), in accordance with claim 1, wherein the content includes a graphic symbol (24) **characterized by** a symbol size (36) and a contact area (38, 138), and the symbol size (36) increases when the hover location (28) is within the contact area (38, 138).

3. The system (10), in accordance with claim 2, wherein the user input corresponds to the graphic symbol (24) when the contact location (22) is within the contact area (38, 138), and the contact area (38, 138) increases in accordance with the increase in the symbol size (36).

4. The system (10), in accordance with claim 3, wherein the symbol size (36) and the contact area (38, 138) remain increased until the finger (18) does not have a hover location (28) within the increased contact area (38, 138).

5. The system (10), in accordance with any one of the preceding claims, wherein the selected portion (32, 132, 232) of the image (16, 116, 216) is characterized as a magnification lens (44) overlying the display (12).

6. The system (10), in accordance with any one of the preceding claims, wherein the magnification lens (44) includes an alignment mark (46) indicative of the contact location (22) that will be assigned by the system (10) if the finger (18) contacts the display (12) from the current hover location (48).
